(19) Europäisches Patentamt
European Patent Office
Office européen des brevets

(11) **EP 1 209 458 B1**

## (12) EUROPÄISCHE PATENTSCHRIFT

(45) Veröffentlichungstag und Bekanntmachung des Hinweises auf die Patenterteilung:
**30.01.2008 Patentblatt 2008/05**

(21) Anmeldenummer: **00710035.7**

(22) Anmeldetag: **22.11.2000**

(51) Int Cl.:
***G01M 15/00*** *(2006.01)*

(54) **Verfahren zur Bestimmung des Geräuschpegels bei Betrieb einer Brennkraftmaschine**

Procedure for determining the noise level of an internal combustion engine

Procédé permettant de déterminer le niveau de bruit d'un moteur à combustion interne

(84) Benannte Vertragsstaaten:
**DE FR GB**

(43) Veröffentlichungstag der Anmeldung:
**29.05.2002 Patentblatt 2002/22**

(73) Patentinhaber: **Ford Global Technologies, LLC Dearborn, MI 48126 (US)**

(72) Erfinder:
• **Christen, Urs**
  **52072 Aachen (DE)**
• **Jakober, Lukas Gregor**
  **8166 Niederweningen (ZH) (CH)**

(74) Vertreter: **Bonsmann, Joachim Bernhard et al Bonsmann & Bonsmann Patentanwälte Kaldenkirchener Strasse 35 a 41063 Mönchengladbach (DE)**

(56) Entgegenhaltungen:
**US-A- 5 784 300**

• **KIKUCHI H ET AL: "FAST NON-ORTHOGONAL WAVELET TRANSFORMS AND RECONSTRUCTION FOR DETONATION DETECTION" CHICAGO, MAY 3 - 6, 1993,NEW YORK, IEEE,US, Bd. -, 3. Mai 1993 (1993-05-03), Seiten 503-506, XP000410045 ISBN: 0-7803-1281-3**
• **A. ISMAIL ET AL.: "Discrete wavelet transform: a tool in smoothing kinematic data" JOURNAL OF BIOMECHANICS, Bd. 32, 1999, Seiten 317-321, XP000989416 UK**
• **FLORKOWSKI M: "WAVELET DENOISING OF PARTIAL DISCHARGE IMAGES" XI'AN, CHINA, JUNE 21 - 26, 2000,NEW YORK, NY: IEEE,US, Bd. CONF. 6, 21. Juni 2000 (2000-06-21), Seiten 459-462, XP000997738 ISBN: 0-7803-5460-5**

**Beschreibung**

Die Erfindung betrifft ein Verfahren zur Bestimmung des Geräuschpegels bei Betrieb einer Brennkraftmaschine, bei dem ein den Zylinderinnendruck (im Folgenden kurz: "Zylinderdruck") repräsentierendes Signal gemessen und gefiltert wird und aus dem gefilterten Wert ein Maß für den Geräuschpegel der Brennkraftmaschine berechnet wird, sowie ein Verfahren zur rückgekoppelten Regelung des Geräuschpegels einer Brennkraftmaschine.

Aus der Literatur ist die Anwendung von Wavelet-Transformationen für die Detektion von Fehlzündungen bei einer Brennkraftmaschine bekannt (KIKUCHI H. et al.: "FAST NON-ORTHOGONAL WAVELET TRANSFORMS AND RECONSTRUCTION FOR DETONATION DETECTION", CHICAGO, MAY 3-6, 1993, NEW YORK, IEEE US. Bd. 3.Mai 1993, Seiten 503-506). Die mit einem akustischen Klopfsensor aufgenommenen Geräusche liefern nach der Transformation Koeffizientenfelder, die visuell eine Unterscheidung zwischen normalen Aufnahmen und solchen mit Klopfereignissen erlauben.

Weiterhin ist in der Literatur die Glättung von Bewegungsdaten von Menschen mit Hilfe von Wavelet-Transformationen beschrieben worden (A. ISMAIL et al.: "Discrete wavelet transform: a tool in smoothing kinematic data", JOURNAL OF BIOMECHANICS, Bd. 32, 1999, Seiten 317-321).

Wie aus Untersuchungen bekannt ist (M.F. Russell: Diesel engine noise: control at source; SAE paper No. 820238, 1982), hängt das beim Betrieb eines Dieselmotors abgestrahlte Geräusch in großem Ausmaß von dem Druckverlauf in den Zylindern ab. Grundsätzlich können dabei zwei Geräuschquellen im Motor unterschieden werden: Zum einen werden Geräusche von den äußeren Oberflächen des Motors abgestrahlt, wenn diese aufgrund des Verbrennungsprozesses vibrieren. Diese Art von Geräusch wird im Folgenden als "Verbrennungsgeräusch" bezeichnet. Hiervon können sog. mechanische Geräusche unterschieden werden, welche von denselben Oberflächen abgestrahlt werden, wenn diese aufgrund von Stößen durch den Kolben, die Nockenwelle, die Lager, die Ventile od. dgl. vibrieren.

Das Verbrennungsgeräusch hängt sehr stark von der Form des Druckverlaufs in den Zylindern und dem entsprechenden Frequenzgehalt ab. Moderne Common-Rail Dieselmotoren ermöglichen mehrfache Kraftstoffeinspritzungen pro Zyklus (z. B. Vor-, Haupt- und Nacheinspritzungen), durch die der Verbrennungsprozess und die Druckentwicklung beeinflusst werden können. Die Zeitsteuerung und die bei jeder Einspritzung eingespritzte Kraftstoffmenge sind gleichzeitig die variablen, welche zum Zwecke der Geräuschkontrolle beeinflusst werden können.

Die Geräuschkontrolle wird dabei derzeit im Wesentlichen in einem offenen Regelkreis vorgenommen, wodurch die Verwendung einer Vielzahl kalibrierter Parametertabellen (Kennfelder) erforderlich wird. Dabei gibt es jedoch zahlreiche Parameter, durch die die Effektivität derartiger Datenmodelle über die Lebensdauer eines Motors beeinträchtigt wird. Stellvertretend seien hier lediglich Variationen der Kraftstoffqualität und Alterungsprozesse der Einrichtungen zur Kraftstoffeinspritzung genannt. Um daher eine robuste und langzeitstabile Geräuschkontrolle zu erreichen, ist eine Rückkopplungskomponente erwünscht. Eine Voraussetzung für eine Rückkopplungsregelung ist jedoch die Verfügbarkeit eines Online-Maßes für den Geräuschpegel. Ein derartiger "Geräuschindex" wird bei bekannten Meßgeräten durch Filtern des Signals des Zylinderdruckes und anschließendes Berechnen des quadratischen Mittels (root mean square, RMS) erhalten (vgl. M. F. Russell, R. Haworth: Combustion noise from high speed direct injection Diesel engines. SAE paper No.850973, 1985).

Im Zusammenhang mit der Analyse von Verbrennungsprozessen in Brennkraftmaschinen ist verschiedentlich die sog. Wavelet-Transformation verwendet worden. So beschreibt die JP 05 248 937 die Anwendung von Wavelets auf das Signal in einem Klopfsensor. In der JP 11 037 898 wird das Geräusch eines Motors mit einem Mikrofon aufgezeichnet und dann mittels Wavelets analysiert. Ein ähnlicher Aufbau wird in der US 5 932 801 beschrieben.

Weiterhin wird in Y. Yajima, K. Nakashima: New measuring technique of cylinder pressure spectrum and its application to combustion noise reduction - Time-frequency analysis of combustion excitation using wavelet transform analysis (JSAE Review 19, p. 280-282, 1998) die Anwendung einer kontinuierlichen Wavelet-Transformation auf Zylindedrucksignale eines Dieselmotors beschrieben. Die Transformation wird jedoch nur für die visuelle Inspektion eines zeitlich aufgelösten Frequenzspektrums verwendet. Für die Berechnung des Verbrennungsgeräusch-Indexes wird die im Stand der Technik übliche strukturelle Dämpfung und sog. A-Gewichtung verwendet.

Schließlich wird bei T. Önsay: The use of wavelet transform and frames in NVH applications (SAE paper No. 951364, 1995) ein Überblick über die Wavelet-Theorie für NVH-Anwendungen (Geräusche, Vibrationen, Rauheit; Noise, Vibration, Harshness) gegeben, wobei der Schwerpunkt jedoch auf Vibrationsanwendungen liegt.

Vor diesem Hintergrund war es Aufgabe der vorliegenden Erfindung, ein verbessertes Verfahren zur Bestimmung eines Geräuschindexes beziehungsweise des Geräuschpegels beim Betrieb einer Brennkraftmaschine, insbesondere eines Dieselmotors, bereitzustellen, dahingehend, dass eine effiziente rückgekoppelte Geräuschkontrolle möglich wird.

Diese Aufgabe wird durch ein Verfahren mit den Merkmalen des Anspruchs 1 gelöst. Vorteilhafte Ausgestaltungen sind in den Unteransprüchen enthalten.

Bei dem Verfahren zur Bestimmung des Geräuschpegels einer Brennkraftmaschine, wie insbesondere eines Dieselmotors, wird ein dem Zylinderdruck entsprechendes Signal gemessen und einer Filterung unterzogen. Aus dem gefilterten Signal wird dann ein geeignetes Maß für den gesuchten Geräuschpegel berechnet. Erfindungsgemäß wird bei der Filterung des Signals eine Wavelet-Transformation des Signals durchgeführt, wobei die Bestimmung des Geräuschpegels anhand des Ergebnisses der Wavelet-Transformation erfolgt.

Wavelet-Transformationen liefern - ähnlich wie Fourier-Transformationen - den Frequenzinhalt eines Signals. Wavelet-Transformationen lokalisieren darüber hinaus das Signal gleichzeitig sowohl in der Zeit (oder in dem Ort) als auch der Frequenz. Die erfindungsgemäß vorgenommene Wavelet-Transformation hat den Vorteil, dass sie zum einen äquivalent zu einer Bandpassfilterung ist. Durch Berücksichtigung nur bestimmter Niveaus der Wavelet-Transformation kann somit der Frequenzinhalt des transformierten Signals gewählt werden. Zum anderen repräsentiert gemäß dem Parseval-Theorem eine Wavelet-Transformation mit orthogonalen Wavelets die Energie des Signals. Das quadratische Mittel (RMS) kann daher aus dem transformierten Signal statt aus dem ursprünglichen Signal berechnet werden. Der erfindungsgemäße Einsatz der Wavelet-Transformation hat ferner den Vorteil, dass dieser weniger rechenintensiv als herkömmliche Filteroperationen ist und dass aus dem wavelet-transformierten Signal gleichzeitig zusätzliche Informationen für andere Anwendungen gewonnen werden können.

Die Wavelet-Transformation wird vorzugsweise als diskrete digitale Wavelet-Transformation implementiert. Für die Anwendung der Transformation im Rahmen der Geräuschanalyse haben sich insbesondere Coiflet 2 Skalierungsfunktionen und Wellenfunktionen als geeignet erwiesen.

Die Erfindung betrifft ferner ein Verfahren zur rückgekoppelten Regelung des Geräuschpegels einer Brennkraftmaschine, insbesondere eines Dieselmotors, wobei auf den Geräuschpegel über eine Veränderung der Motorbetriebsparameter Einfluss genommen wird. Das Verfahren ist dadurch gekennzeichnet, dass der als Eingangssignal für die Regelung dienende Geräuschpegel des Motors nach einem Verfahren der oben erläuterten Art bestimmt wird. Das heißt, dass der Zylinderdruck gemessen und mit Hilfe einer Wavelet-Transformation gefiltert wird.

Im Folgenden wird die Erfindung anhand der Zeichnungen beispielhaft näher erläutert. Es zeigen:

Fig. 1  eine schematische Darstellung einer Wavelet-Transformation eines Zylinderdrucksignals;

Fig. 2  das Schema eines Bestimmungsgerätes für einen Geräuschindex nach dem Stand der Technik;

Fig. 3  ein Amplituden-Diagramm von digitalen und analogen Versionen des Systems nach Figur 2;

Fig. 4  Frequenzbänder einer Zwei-Niveau Coiflet 2 Wavelet-Transformation;

Fig. 5  ein Amplituden-Diagramm zum Vergleich von herkömmlichen Filtern und von Wavelet-Filtern;

Fig. 6  eine schematische Darstellung eines Systems zur wavelet-basierten Bestimmung des Verbrennungsgeräuschs;

Fig. 7  eine Coiflet 2 Skalierungsfunktion und Wavelet-Funktion;

Fig. 8  die Korrelation zwischen einem herkömmlich bestimmten und einem wavelet-basierten Geräuschindex;

Fig. 9  die bei einer Fourier-Transformation und bei einer Wavelet-Transformation verwendeten Basisfunktionen;

Fig. 10  Frequenzantworten in dem Filterpaar für die Coiflet 2 Wavelet-Transformation und

Fig. 11  eine baumartige Struktur der Filter für die Wavelet-Transformation.

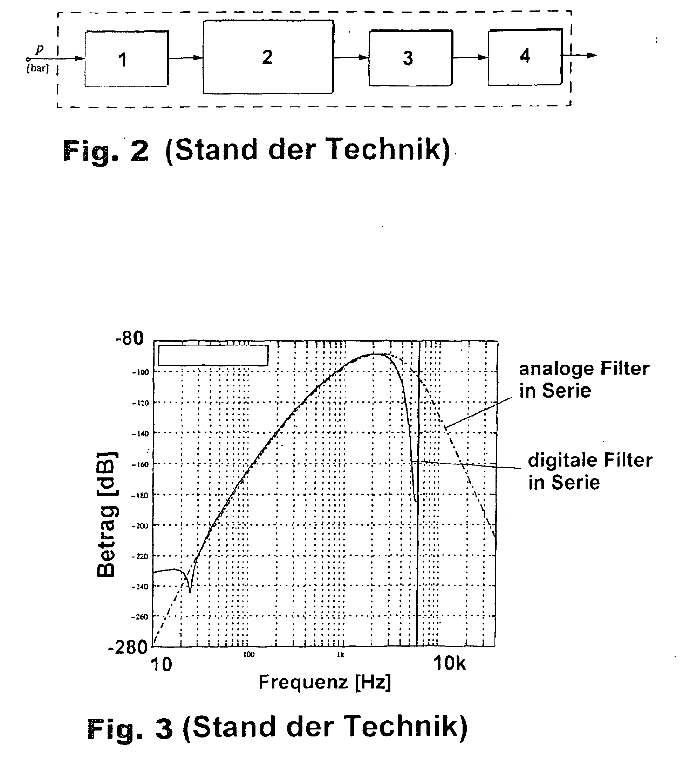

In Figur 2 ist der Aufbau einer herkömmlichen Verbrennungsgeräusch-Messeinheit nach dem Stand der Technik schematisch dargestellt. Das Verbrennungsgeräusch kann aus dem Verlauf des Zylinderdruckes p bestimmt werden. Dieser wird in einer Kalibriereinheit 1 des Systems von Figur 2 auf ein bestimmtes Referenz-Schalldruckniveau bezogen. In einem anschließenden Filterblock 2 wird zunächst die sogenannte strukturelle Dämpfung berücksichtigt, bei der die Motorstruktur als ein Filter (eine Übertragungsfunktion) angesehen wird, welches die Dämpfung des durch den Verbrennungsprozess angeregten Zylinderdrucksignals auf hörbare Geräusche in einer gewissen Entfernung vom Motorblock beschreibt. Weiterhin kann die Empfindlichkeit des menschlichen Ohres durch Anwendung eines zweiten Filters im Filterblock 2 nach der strukturellen Dämpfung berücksichtigt werden, was die sogenannte A-Gewichtung darstellt.

Aus dem vom Filter 2 erhaltenen Spektrum kann ein Index für den Geräuschpegel durch Berechnung des quadratischen Mittels (RMS) abgeleitet werden. Dieses geschieht in Block 3. Im letzten Block 4 des Systems nach Figur 2 findet eine Konversion in die Einheit dB(A) statt.

Figur 3 zeigt ein Amplituden-Diagramm für den Filter 2 von Figur 2 mit kombinierter Strukturdämpfung und A-Gewichtung. Die Abtastfrequenz beträgt dabei 12 kHz.

Bei bekannten Verbrennungsgeräusch-Messgeräten wird für die Bestimmung des Verbrennungsgeräusches nur ein bestimmtes Frequenzband berücksichtigt. Die Form des Strukturdämpfungsfilters ist aus der Messung einer großen Anzahl von Lastwagenmotoren und Traktormotoren abgeleitet und repräsentiert die Dämpfung eines durchschnittlichen Verbrennungsmotors. In ähnlicher Weise spiegelt der A-Gewichtungsfilter eine mittlere Empfindlichkeit des menschlichen Ohres wider. Der bei den bekannten Verbrennungsgeräusch-Messgeräten ermittelte Geräuschpegel ist daher nicht als absolutes Maß für das Verbrennungsgeräusch, sondern eher als relativer Wert zu betrachten, der den Vergleich von Verbrennungsvarianten erlaubt.

Im Gegensatz zu dem in Figur 2 dargestellten System wird erfindungsgemäß eine auf Wavelets basierende Berechnung des Geräuschindexes vorgenommen. Eine detailliertere Beschreibung der Grundlagen der Wavelet-Transformation erfolgt weiter unten.

Die Wavelet-Transformation zerlegt ein Signal in ein Approximationssignal und mehrere Detailsignale. Die Transformation erfolgt durch wiederholtes Filtern des ursprünglichen Signals, was zu Detailsignalen mit band-beschränkten Frequenzinhalten führt. Für die wavelet-basierte Geräuschmessung werden bevorzugt derartige Detailsignale eingesetzt, deren Frequenzbänder denselben Bereich wie ein Filter in einem Geräuschmeßgerät nach dem Stand der Technik abdecken.

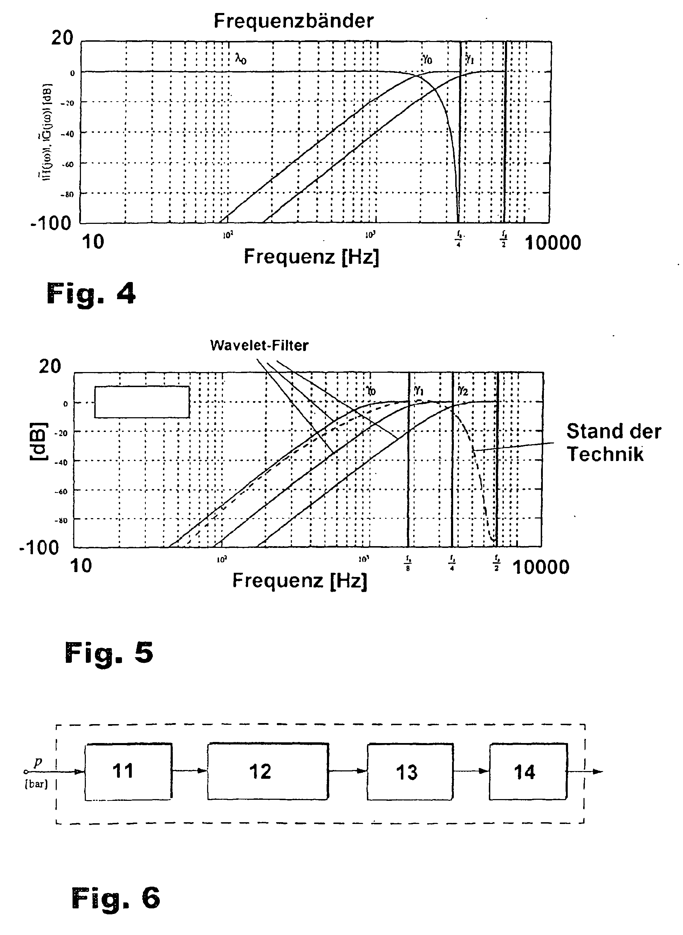

Für eine zwei-Niveau Wavelet-Transformation unter Verwendung der Coiflet 2 Wavelets erhält man auf diese Weise die in Figur 4 dargestellten Frequenzbänder. Hieraus ist erkennbar, dass die FIR-Filter (Finite Impuls Response), die für die Wavelet-Transformation angewendet werden, Tiefpass- und Hochpassfilter sind. Der Frequenzgehalt des Detailsignals wird durch die verschiedenen Hochfrequenzbänder bestimmt, während der Frequenzgehalt des Approximationssignals durch das Frequenzband des Tiefpassfilters begrenzt ist. Das ursprüngliche Signal wird bei einer Frequenz $f_s$ = 14,6 kHz abgetastet. Die vertikalen Linien zeigen die Nyquist-Frequenzen an, welche den Frequenzgehalt der entsprechenden Approximation und der Detailsignale begrenzen.

Um die Frequenzbänder der Detailsignale mit der Form des herkömmlichen Filters zu vergleichen, wurden in Figur 5 die Beträge in einem entsprechenden Amplituden-Diagramm aufgetragen. Hieraus kann entnommen werden, dass zwei oder drei Detailniveaus der Wavelet-Transformation (z.B. $\gamma_0, \gamma_1, \gamma_2$) beibehalten werden sollten, um denselben Frequenzbereich wie herkömmliche Filter abzudecken.

Das Parseval-Theorem stellt folgende Beziehung zwischen der Wavelet-Transformation mit orthogonalen Wavelets und der Signalenergie her (zur Erläuterung der verwendeten Formelzeichen siehe die detaillierte Beschreibung der Grundlagen der Wavelet-Transformation weiter unten):

$$\int |f(x)|^2 dx = \sum_{l=-\infty}^{\infty} |\lambda_{0,l}|^2 + \sum_{k=-\infty}^{\infty} \sum_{j=0}^{\infty} |\gamma_{j,k}|^2 \qquad (1)$$

Auf diese Weise kann ein neuer, wavelet-basierter Geräuschindex $NI_{WVL}$ definiert werden als

$$NI_{WVL} = 20 \cdot \log_{10}\left(\frac{c}{n} \cdot \sqrt{\sum_k \sum_{j_m} |\gamma_{j_m,k}|^2}\right) \qquad (2)$$

wobei c ein Skalierungsfaktor zur Anpassung des absoluten Geräuschpegels und n die Anzahl der Abtastpunkte des ursprünglichen Signals ist.

Die Struktur dieses wavelet-basierten Verbrennungsgeräusch-Messverfahrens ist in Figur 6 dargestellt. Wie bei dem herkömmlichen Verbrennungsgeräusch-Messverfahren setzt ein Kalibrierer 11 das eingehende Drucksignal p mit einem Referenzschalldruck in Beziehung. Da die Verstärkung der Wavelet-Transformation gleich eins ist, passt der Kalibrierer 11 auch das Niveau des resultierenden Signals entsprechend dem höchsten Niveau der herkömmlichen Filter an (ca. -90 dB). Dies erfolgt durch Multiplikation des Signals mit einem Faktor vor Anwendung der Wavelet-Transformation.

Nach der Wavelet-Transformation in Block 12 wird in Block 13 die Quadratwurzel der Summe derjenigen quadrierten Detailkoeffizienten berechnet, die beibehalten werden, durch die Länge des ursprünglichen Signals dividiert und schließlich in Block 14 in Dezibel [dB] konvertiert.

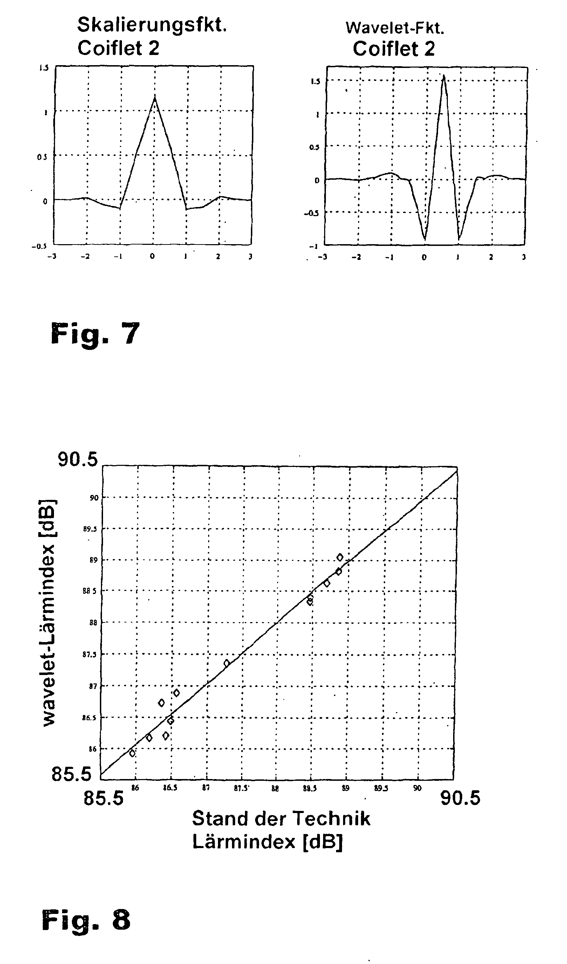

Für die oben erläuterte Wavelet-Transformation wurden Coiflet 2 Wavelets gemäß Figur 7 verwendet. Es können jedoch auch verschiedene andere Wavelets verwendet werden, wobei diese vorzugsweise (näherungsweise) symmetrisch und orthogonal sein sollten.

Beide oben beschriebenen Verbrennungsgeräusch-Messgeräte wurden mit denselben Drucksignalen getestet, die bei 2440 U/min Motordrehzahl und 7,78 bar mittlerem induzierten Druck für verschiedene Zeitsteuerungen und Mengen der Voreinspritzung aufgenommen wurden. Die Voreinspritzungsmengen liegen in einem Bereich von 1,5 mm$^3$ bis 2,5 mm$^3$ pro Takt, und die Einspritz-Zeitsteuerung liegt zwischen 6° bis 9,5° vor dem oberen Totpunkt. Die Abtastfrequenz $f_s$ beträgt 14,6 kHz (entsprechend 1° Kurbelwinkel bei 2440 U/min).

Für den wavelet-basierten Geräuschindex wurden die ersten drei Detailniveaus der Wavelet-Transformation betrachtet. Figur 8 zeigt eine ausgeprägte Korrelation zwischen dem erfindungsgemäßen (vertikale Achse) und dem herkömmlichen Index (horizontale Achse). Beide Indizes zeigen etwa dieselbe Sensitivität. Dieses Ergebnis zeigt, dass der wavelet-basierte Geräuschindex eine gute Alternative zum herkömmlichen Geräuschindex darstellt.

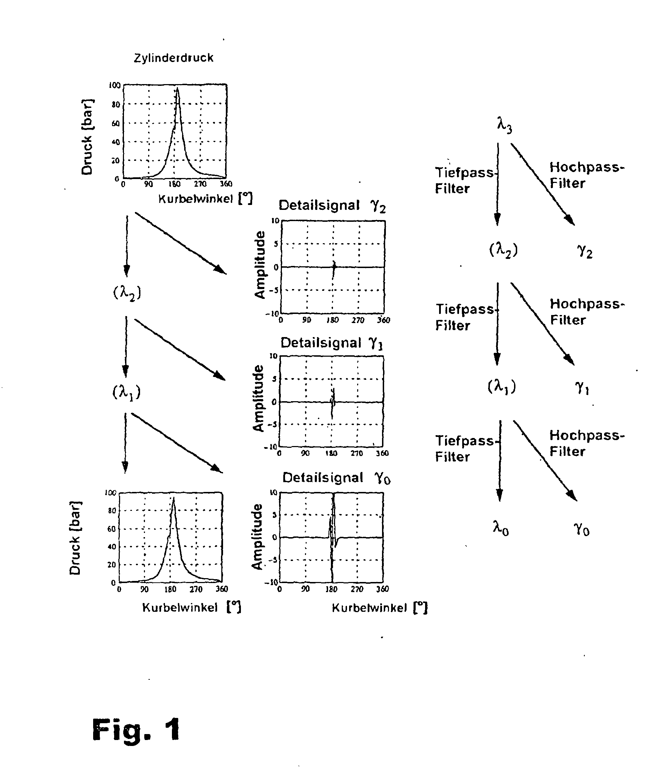

Im Folgenden wird die Technik der Wavelet-Transformation detaillierter erläutert. Durch eine Wavelet-Transformation wird ein Signal in ein Approximationssignal und ein Detailsignal zerlegt. Das Approximationssignal enthält niederfrequente Information über das Ursprungssignal und stellt eine Art laufende Mittelwertbildung dar. Das Detailsignal enthält hochfrequente Information, die im Approximationssignal vernachlässigt wird. Figur 1 zeigt am Beispiel der Transformation eines Zylinderdrucksignals schematisch die bei einer Wavelet-Transformation ablaufenden Schritte.

Die Zerlegung eines Ursprungssignals kann bis zu jedem gewünschten Niveau vorangetrieben werden, indem das Approximationssignal des vorangegangenen Niveaus als das Startsignal verwendet und ein weiterer Schritt der Wavelet-Transformation angewendet wird. Dieses Vorgehen führt zu einem endgültigen Approximationssignal und mehreren Detailsignalen. Die resultierenden Signale liegen nach wie vor im Zeitbereich; es wird jedoch auch Information über den Frequenzinhalt offengelegt, da die in dem Detailsignal auf jedem Niveau enthaltenen Spektren bekannt sind. Aus diesem Grunde können zur selben Zeit Aussagen über das Verhalten des ursprünglichen Signals in Zeit und Frequenz gemacht werden.

Bei jedem Schritt der. Transformation bleibt die Anzahl der Datenpunkte erhalten: Eine Hälfte der Datenpunkte speichert das Approximationssignal, die andere Hälfte das Detailsignal. Das gesamte Vorgehen ist verlustlos, und das ursprüngliche Signal kann immer durch Anwendung der inversen Wavelet-Transformation auf die Approximation und die Detailsignale wiederhergestellt werden.

Das Prinzip der Wavelet-Transformation kann am einfachsten erkannt werden durch einen Vergleich mit der Fourier-Transformation. Beide Transformationen expandieren das ursprüngliche Signal in eine Reihe von Basisfunktionen. Im Falle der Fourier-Transformation

$$f(x) = \frac{1}{2}a_0 + \sum_{n=1}^{\infty} [a_n \cos(n\omega_0 x) + b_n \sin(n\omega_0 x)] \qquad (3)$$

sind die Basisfunktionen Sinusfunktionen. Für die Wavelet-Transformation

$$f(x) = \sum_{k=-\infty}^{\infty} \lambda_{0,k}\varphi(x-k) + \sum_{k=-\infty}^{\infty}\sum_{j=0}^{\infty} \gamma_{j,k}\psi(2^j x - k) \qquad (4)$$

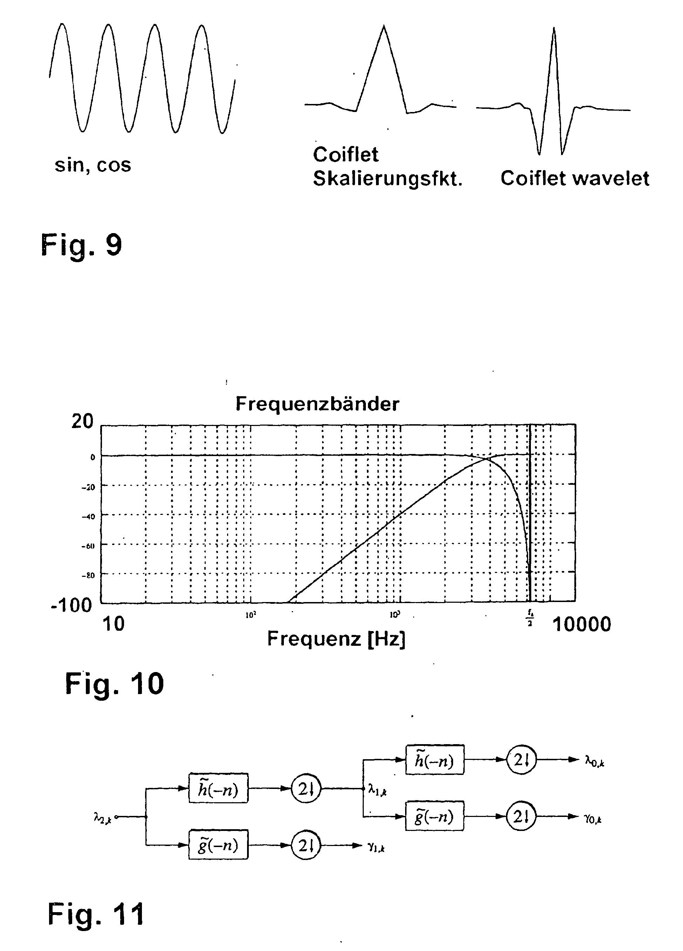

sind die Basisfunktionen die Skalierungsfunktion $\varphi$ und die Wavelet-Funktion $\psi$. Es gibt nicht nur ein Paar von Skalierungs- und Wavelet-Funktionen, sondern sehr viele Familien von $\varphi$- und $\psi$-Paaren mit verschiedenen Eigenschaften, die sie für bestimmte Anwendungen jeweils besonders geeignet machen. Im Gegensatz zu Sinusfunktionen sind Skalierungsfunktionen und Wavelets "kleine Wellen", deren Energie in einem endlichen Intervall auf der x-Achse (Zeit oder Ort) konzentriert ist (vgl. Figur 9). Dies ermöglicht es, Zeit- und Frequenzanalysen gleichzeitig durchzuführen. Skalierungsfunktionen und Wavelets haben die folgenden Eigenschaften (vgl. C.S. Burrus, R. A. Gopinath, H. Guo: Introduction to Wavelets and Wavelet Transforms, A Primer; Prentice Hall, Upper Saddle River, New Jersey, 1998):

1. Die Wavelet-Systeme werden aus einer einzigen Skalierungsfunktion oder einem Wavelet durch Translation (das heißt Lokalisierung der Energie von $\varphi$ oder $\psi$ an verschiedenen Orten entlang der unabhängigen Achse durch Subtraktion von k) und Skalierung (das heißt Kompression oder Dehnung der unabhängigen Achse durch Multiplikation von x mit $2^j$) erzeugt. Die Skalierungsfunktionen sind gegeben durch

$$\varphi_{0,\,k}(x) \;=\; \varphi(x-k) \qquad k \in \mathbf{Z}. \tag{5}$$

Das "Mutter-Wavelet" $\psi(x)$ wird durch die zweidimensionale Parametrisierung verschoben und skaliert

$$\psi_{j,\,k}(x) \;=\; 2^{j/2}\psi(2^j x - k) \qquad j,k \in \mathbf{Z} \tag{6},$$

wobei Z die Menge aller ganzen Zahlen ist und der Faktor $2^{j/2}$ eine konstante Normierung unabhängig von der Skala j gewährleistet.

2. Die meisten Wavelet-Systeme erfüllen die Multiresolutions-Bedingungen

$$\varphi(x) = \sum_n \tilde{h}(n) \cdot 2^{1/2}\varphi(2x-n), \qquad n \in \mathbf{Z}$$

$$\psi(x) = \sum_n \tilde{g}(n) \cdot 2^{1/2}\varphi(2x-n), \qquad n \in \mathbf{Z} \tag{7}$$

Diese Bedingungen besagen, dass eine Skalierungsfunktion $\varphi$ oder ein Wavelet $\psi$ als eine gewichtete Summe von verschobenen Skalierungsfunktionen $\varphi(2x)$ des nächsten Niveaus höherer Auflösung dargestellt werden können. $\tilde{h}(n)$ und $\tilde{g}(n)$ sind die sogenannten Gewichtungs- oder Filterkoeffizienten.

Die Multiresolutions-Eigenschaft bedeutet, dass jedes Signal, welches durch eine gewichtete Summe von $\varphi(x\text{-}k)$ dargestellt werden kann, auch als eine gewichtete Summe von $\varphi(2x\text{-}k)$ repräsentiert werden kann. Wenn die Basisfunktionen halb so breit sind und in halb so breiten Schritten verschoben werden, können sie feinere Details und daher eine größere Klasse von Signalen erfassen.

Das Ziel der Fourier- und der Wavelet-Transformationen besteht darin, Koeffizienten $a_n$, $b_n$, $\lambda_{0,k}$ und $\gamma_{j,k}$ der entsprechenden Reihendarstellung zu finden, da diese unter Umständen nützlichere Information über das Signal bereitstellen können, als aus dem ursprünglichen Signal direkt ersichtlich wäre. Anders als die Fourier-Transformation bildet die diskrete Wavelet-Transformation ein eindimensionales abgetastetes Signal in ein zweidimensionales Feld von Koeffizienten ab, dessen zwei Dimensionen die "Zeit" k und die Skala ("Frequenz") j sind. Die Approximationskoeffizienten $\lambda$ enthalten alle verbleibenden niederfrequenten Informationen und haben daher nur einen Index, die Verschiebung k der Lokalisierung in der Zeit (oder im Ort). Gelegentlich wird die Notation $\gamma_j(k)$ für $\gamma_{j,k}$ und $\lambda_0(k)$ für $\lambda_{0,k}$ verwendet, um den Unterschied zwischen den zwei Indizes zu verdeutlichen.

Wenn die Wavelets oder Skalierungsfunktionen eine orthogonale Basis bilden:

$$\langle \varphi_{j,\,k}(x), \psi_{j,\,l}(x) \rangle = \int \varphi_{j,\,k}(x) \cdot \psi_{j,\,l}(x)\,dx = 0 \qquad i,j,k,l \in \mathbf{Z}$$

$$\langle \psi_{i,\,k}(x), \psi_{j,\,l}(x) \rangle = \int \psi_{i,\,k}(x) \cdot \psi_{j,\,l}(x)\,dx = c \cdot \delta_{ij}\delta_{kl} \qquad \delta_{ij} = \begin{cases} 1 & i = j \\ 0 & i \neq j \end{cases} \tag{8}$$

können die Approximationskoeffizienten und Detailkoeffizienten durch Bestimmung der inneren Produkte berechnet werden

$$\lambda_{0,\,k} = \langle f(x), \varphi_{0,\,k}(x) \rangle = \int f(x) \cdot \varphi_{0,\,k}(x)\,dx$$

$$\gamma_{j,\,k} = \langle f(x), \psi_{j,\,k}(x) \rangle = \int f(x) \cdot \psi_{j,\,k}(x)\,dx \tag{9}$$

In der Praxis erweist es sich allerdings nicht als effizient, die diskrete Wavelet-Transformation durch Bestimmung der inneren Produkte zu berechnen. Basierend auf Multiresolutions-Bedingungen kann gezeigt werden, dass nie mit Skalierungs- oder Wavelet-Funktionen direkt gearbeitet werden muss. Unter Betrachtung von λ und γ als abgetastete Signale können digitale Filter gefunden werden, welche die Approximations- und Detailsignale auf verschiedenen Skalen berechnen. Auf diese Weise können die folgenden Gleichungen abgeleitet werden:

$$\lambda_j(k) = \sum_n \tilde{h}(-n) \cdot \lambda_{j+1}(2k-n)$$
$$\gamma_j(k) = \sum_n \tilde{g}(-n) \cdot \lambda_{j+1}(2k-n) \qquad (10)$$

Die digitalen Filter werden durch die Koeffizienten $\tilde{h}(-n)$ und $\tilde{g}(-n)$ beschrieben. Es handelt sich hierbei um FIR-Filter. Der Filter $\tilde{h}$, der zur Berechnung des Approximationssignals verwendet wird, ist ein Tiefpassfilter, während $\tilde{g}$, der zur Berechnung des Detailsignals verwendet wird, ein Hochpassfilter ist.

In Figur 10 sind die Frequenzantworten eines Paares derartiger Filter dargestellt. Gemäß Gleichung (10) muss die Abtastrate der Signale nach der Filterung halbiert (downsampled) werden, um die Signale $\lambda_{j,k}$ und $\gamma_{j,k}$ geringerer Auflösung zu erhalten. Die Filterung und Abtastratenhalbierung kann an den Approximationssignalen in iterativer Weise vorgenommen werden, um die gesamte Wavelet-Zerlegung mit verschiedenen Skalen j und ein endgültiges Approximationssignal zu finden. Die resultierende baumartige Struktur von Filtern ist in Figur 11 gezeigt. In diesem Beispiel wird das ursprünglich abgetastete Signal $\lambda_{2,k}$ in ein Approximationssignal $\lambda_{0,k}$ und zwei Detailsignale $\gamma_{1,k}$ und $\gamma_{0,k}$ zerlegt.

**Patentansprüche**

1.   Verfahren zur Bestimmung des Geräuschpegels bei Betrieb einer Brennkraftmaschine, bei dem ein den Zylinderinnendruck (p) repräsentierendes Signal gemessen und gefiltert wird und aus dem gefilterten Wert ein Maß, d.h. ein Zahlenwert, für den Geräuschpegel der Brennkraftmaschine berechnet wird,
wobei bei der Filterung eine Wavelet-Transformation durchgeführt wird und das Maß für den Geräuschpegel anhand des Ergebnisses der Wavelet-Transformation berechnet wird.

2.   Verfahren nach Anspruch 1,
**dadurch gekennzeichnet, dass** nur diejenigen Koeffizienten der Wavelet-Transformation für die Berechnung des Geräuschpegelmaßes verwendet werden, die Frequenzen einer vorgegebenen Bandbreite repräsentieren.

3.   Verfahren nach einem der Ansprüche 1 oder 2,
**dadurch gekennzeichnet, dass** die wavelet-Transformation eine diskrete digitale Wavelet-Transformation ist.

4.   verfahren nach mindestens einem der Ansprüche 1 bis 3,
**dadurch gekennzeichnet, dass** die Wavelet-Transformation mit Coiflet 2-Wellenfunktionen durchgeführt wird.

5.   Verfahren nach Anspruch 4,
**dadurch gekennzeichnet, dass** zwei oder drei Detailkoeffizienten der Wavelet-Transformation zur Berechnung des Maßes für den Geräuschpegel herangezogen werden.

6.   Verfahren nach einem der Ansprüche 1 bis 5, **dadurch gekennzeichnet, dass** zur Berechnung des Geräuschpegelmaßes die Quadratwurzel der Summe der quadrierten, bei der Wavelet-Transformation erhaltenen Detailkoeffizienten berechnet und durch die Länge des ursprünglichen Signals dividiert wird.

7.   Verfahren zur rückgekoppelten Regelung des Geräuschpegels einer Brennkraftmaschine mittels einer Veränderung der Motorbetriebsparameter,
**dadurch gekennzeichnet, dass** ein Maß für den Geräuschpegel der Brennkraftmaschine in einem Verfahren nach einem der Ansprüche 1 bis 6 bestimmt und als Ist-Größe für die Rückkopplungsregelung verwendet wird.

**Claims**

1.  Method for determining the noise level during operation of an internal combustion engine, in the case of which a signal representing the cylinder internal pressure (p) is measured and filtered and a measure, that is to say a numerical value, of the noise level of the internal combustion engine is calculated from the filtered value, in which method a wavelet transformation is carried out during filtering and the measure of the noise level is calculated with the aid of the result of the wavelet transformation.

2.  Method according to Claim 1, **characterized in that** only those coefficients of the wavelet transformation which represent the frequencies of a prescribed bandwidth are used for the calculation of the measure of noise level.

3.  Method according to one of Claims 1 or 2, **characterized in that** the wavelet transformation is a discrete digital wavelet transformation.

4.  Method according to at least one of Claims 1 to 3, **characterized in that** the wavelet transformation is carried out with the aid of Coiflet 2 wave functions.

5.  Method according to Claim 4, **characterized in that** two or three detail coefficients of the wavelet transformation are used for calculating the measure of the noise level.

6.  Method according to one of Claims 1 to 5, **characterized in that**, in order to calculate the measure of noise level, the square root of the sum of the squared detail coefficients obtained during the wavelet transformation is calculated and is divided by the length of the original signal.

7.  Method for feedback control of the noise level of an internal combustion engine by means of varying the engine operating parameters, **characterized in that** a measure of the noise level of the internal combustion engine is determined in a method according to one of Claims 1 to 6 and is used as actual variable for the feedback control.

**Revendications**

1.  Procédé de détermination du niveau de bruit d'un moteur à combustion interne, dans lequel un signal qui représente la pression (p) à l'intérieur du cylindre est mesuré et filtré et une mesure, c'est-à-dire une valeur chiffrée, du niveau de bruit du moteur à combustion interne est calculée à partir de la valeur filtrée, dans lequel, lors du filtrage, on réalise une transformation en ondelettes et la mesure du niveau de bruit est calculée à l'aide du résultat de la transformation en ondelettes.

2.  Procédé selon la revendication 1, **caractérisé en ce que** pour le calcul de la mesure du niveau de bruit, on utilise uniquement les coefficients de la transformation en ondelettes qui représentent des fréquences situées à l'intérieur d'une bande de largeur donnée.

3.  Procédé selon la revendication 1 ou 2, **caractérisé en ce que** la transformation en ondelettes est une transformation en ondelettes numérique discrète.

4.  Procédé selon au moins une des revendications 1 à 3, **caractérisé en ce que** la transformation en ondelettes est réalisée avec des fonctions d'onde de Coiflet 2.

5.  Procédé selon la revendication 4, **caractérisé en ce que** pour le calcul de la mesure du niveau de bruit, on fait intervenir deux ou trois coefficients de détail de la transformation en ondelettes.

6.  Procédé selon l'une quelconque des revendications 1 à 5, **caractérisé en ce que** pour calculer la mesure du niveau de bruit, on calcule la racine carrée de la somme des carrés des coefficients de détail obtenus lors de la transformation en ondelettes et on la divise par la longueur du signal initial.

7.  Procédé de régulation avec rétroaction du niveau de bruit d'un moteur à combustion interne au moyen d'une modification des paramètres de fonctionnement du moteur, **caractérisé en ce qu'**une mesure du niveau de bruit du moteur à combustion interne est déterminée dans un procédé selon l'une quelconque des revendications 1 à 6 et est utilisée comme grandeur effective pour la régulation avec rétroaction.

# Fig. 1

**Fig. 2** (Stand der Technik)

analoge Filter
in Serie

digitale Filter
in Serie

**Fig. 3** (Stand der Technik)

## Frequenzbänder

**Fig. 4**

Wavelet-Filter

Stand der Technik

**Fig. 5**

**Fig. 6**

Skalierungsfkt.
Coiflet 2

Wavelet-Fkt.
Coiflet 2

# Fig. 7

# Fig. 8

Stand der Technik
Lärmindex [dB]

sin, cos  Coiflet Skalierungsfkt.  Coiflet wavelet

# Fig. 9

Frequenzbänder

Frequenz [Hz]

# Fig. 10

# Fig. 11

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- JP 05248937 A
- JP 11037898 A
- US 5932801 A

### In der Beschreibung aufgeführte Nicht-Patentliteratur

- **KIKUCHI H et al.** FAST NON-ORTHOGONAL WAVELET TRANSFORMS AND RECONSTRUCTION FOR DETONATION DETECTION. *IEEE,* 03. Mai 1993, 503-506
- **A. ISMAIL et al.** Discrete wavelet transform: a tool in smoothing kinematic data. *JOURNAL OF BIOMECHANICS,* 1999, vol. 32, 317-321
- **M.F. RUSSELL.** Diesel engine noise: control at source. *SAE,* 1982, (820238
- **M. F. RUSSELL ; R. HAWORTH.** Combustion noise from high speed direct injection Diesel engines. *SAE paper,* 1985, (850973
- *JSAE Review,* 1998, vol. 19, 280-282
- *SAE paper,* 1995, (951364
- Introduction to Wavelets and Wavelet Transforms. **C.S. BURRUS ; R. A. GOPINATH ; H. GUO.** Upper Saddle River. Prentice Hall, 1998